# EUROPEAN PATENT APPLICATION

(11) **EP 1 030 169 A2**
(43) Date of publication of application: **23.08.2000**
(21) Application number: 00301140.0
(22) Date of filing: 15.02.2000
(51) Int. Cl.: G01M 17/02, G01M 1/04

(54) **Apparatus for measuring uniformity and/or dynamic-balance of wheeled tire**

(30) Priority: 18.02.1999 JP 3946699
(71) Applicant: KOKUSAI KEISOKUKI KABUSHIKI KAISHA, Tama-shi, Tokyo (JP)
(72) Inventor: Matsumoto, Sigeru, Musashino-shi (JP)
(74) Representative: Smith, Samuel Leonard

(57) **Abstract**

A measuring apparatus for the uniformity and/or the dynamic-balance of a wheeled tire is disclosed. The apparatus comprises: a rotatable spindle unit for supporting a wheeled tire to be tested, the spindle unit being provided, at the upper end portion thereof, with a chucking system for chucking a wheel of the wheeled tire; a holding member which holds the spindle unit with allowing to vibrate during rotation thereof; and a regulating system which prevents the vibration of the spindle unit during rotation thereof, wherein the vibration of the spindle unit is prevented by the regulating system during a uniformity measurement.

## Description

The present invention relates to an apparatus for measuring a uniformity and/or dynamic-balance of a wheeled tire.

There has been known a tire uniformity measuring apparatus which measures solely the uniformity of a tested tire and a tire dynamic-balance measuring apparatus which measures solely the dynamic balance of a tested tire.

The uniformity measuring apparatus is constituted to rotate a tire by pressing a rotating drum against the outer circumferential surface of the tire and to measure the variation of loads in the radial direction and thrust direction. The uniformity measuring apparatus must be constituted to be able to securely and firmly support the tested tire as the load applied to the tested tire by the rotating drum amounts to 100 kg or more.

On the other hand, the dynamic-balance measuring apparatus is to detect the eccentricity of the tested tire based on the state of vaibration during rotation thereof. Thus, the dynamic-balance measuring apparatus is to be so constituted as to support the tested tire to be rotatable while allowing it to vibrate during rotation thereof.

Due to the above-described difference in supporting the tested tire, it has been difficult to measure both the uniformity and the dynamic-balance of the tested tire by a single common measuring apparatus. It has further been desired to measure the uniformity and the dynamic-balance of a wheeled tire by a single apparatus.

It is therefore an object of the invention to provide an apparatus capable of performing uniformity and/or dynamic-balance measurements for a wheeled tire by a single apparatus.

In one aspect of the present invention, there is provided a measuring apparatus for the uniformity and/or the dynamic-balance of a wheeled tire, which comprises: a rotatable spindle unit for supporting a wheeled tire to be tested, the spindle unit being provided, at the upper end portion thereof, with a chucking system for chucking a wheel of the wheeled tire; a holding member which holds the spindle unit with allowing to vibrate during rotation thereof; and a regulating system which prevents the vibration of the spindle unit during rotation thereof, wherein the vibration of the spindle unit is prevented by the regulating system during a uniformity measurement.

With thus constituted measuring apparatus, the spindle unit holding a wheeled tire to be tested can vibrate during rotation thereof for a dynamic-balance measurement, while the vibration of the spindle unit is prevented during rotation thereof for the uniformity measurement, which enables to measure both the dynamic-balance and the uniformity of a wheeled tire by a single apparatus.

When a uniformity measurement is performed, a rotary drum is pressed against the circumferential surface of the tested tire.

In the embodiment, the chucking system comprises a plurariry of chucking pawls radially arranged about the axial center of the spindle unit, and the chucking pawls are respectively movable in the radial direction.

The chucking pawls are biased toward the axial center of the spindle unit by spring members, respectively, and moved away from the axial center against biasing force of the spring members so as to internally engage a hub hole of a wheel of a wheeled tire for chucking.

The measuring apparatus further comprises a chuck driving member arranged inside the spindle unit so as to move in the axial direction of the spindle unit for driving the chucking system. The chuck driving member is provided with an actuating portion at the upper end thereof to actuate the chucking unit.

Optionally, the actuating portion is formed as a pyramid having a plurality of slope surfaces, and the inner ends of the chucking pawls contact said slope surfaces of the actuating portion to be respectively moved in the radial direction upon axial movement of the chuck driving member.

The measuring apparatus may further comprise a hollow air chamber formed in the spindle unit, and the chuck driving member extends through the hollow air chamber and is provided with a wall member which segments the air chamber into upper and lower portions. An air supply system is to be arranged inside the spindle unit for selectively supplying air into either one of the upper and lower portions of the hollow air chamber. The imbalance of air pressure between the upper and lower portions of the air chamber causes the chuck driving member to be moved in the axial direction of the spindle unit.

Preferably, a pressing unit is to be disposed above the spindle unit for pressing the wheeled tire toward the spindle unit with allowing rotation thereof to firmly hold a wheeled tire between the pressing unit and the spindle unit.

Optionally, the pressing unit is provided with a center shaft member downwardly extending therefrom and rotatably supported by the pressing unit. An adapter member is preferably to be placed between the wheeled tire and the pressing unit. The adapter member may comprise a plurality of pins arranged to be engaged with a plurality of bolt holes of the wheel of the wheeled tire, respectively, and a disk member which securely carries the pins and provided with a tapered hole at the center thereof, the lower end of the center shaft member being engaged with the tapered hole when pressing the wheeled tire toward the spindle unit.

Optionally, the holding member may comprise a housing which rotatably holds the spindle unit, and a plurality of elastic members provided between the housing and a frame member for supporting the housing. Further, the regulating system may comprsie a coupling member supported by the frame member to be movable between operative and inoperative positions, and the coupling member firmly couples the housing to the frame member at the operative position. The coupling member should be moved to the operative position during a uniformity measurement.

According to another aspect of the present invention, there is provided a measuring apparatus for the uniformity and/or the dynamic-balance of a wheeled tire, which comprises: a rotatable spindle unit for supporting a wheeled tire to be tested; an adapter member for securely fitting the wheeled tire onto the spindle unit; a holding member which holds the spindle unit with allowing to vibrate during rotation thereof; and a regulating system which prevents the vibration of the spindle unit during rotation thereof, wherein the vibration of the spindle unit is prevented by the regulating system during a uniformity measurement.

Preferably, the measuring apparatus further comprises an adapter carrying unit for rotatably carrying the adapter member which is movable in the axial direction of said spindle unit.

Optionally, the adapter member may comprise a disk member, a plurality of pins carried by the disk member to be engaged with bolt holes of a wheel of the wheeled tire, respectively, and an insertion shaft extending downwardly from the center of the disk member to be inserted into the interior of the spindle shaft and engaged therewith with passing through a hub hole of a wheel of the wheeled tire.

The spindle unit is to be provided with a receiving hole at the upper center portion thereof for receiving the insertion shaft of the adapter member, and the insertion shaft is chucked by a collet chuck mechanism in the spindle unit so as to sandwitch a wheel of the wheeled tire to be tested between the adapter member and the upper portion of the spindle unit.

Preferably, the adapter carrying unit is to be constituted to be able to release the adapter member when the adapter member is connected to the spindle unit. The adapter member is released from the adapter carrying unit during a dynamic-balance measurement.

In the embodiment, a hollow air chamber and a wall member which segments said air chamber into upper and lower portions are formed in the spindle unit. An air supply system is arranged inside the spindle unit for selectively supplying air into either one of the upper and lower portions of the hollow air chamber. The imbalance of air pressure between the upper and lower portions of the air chamber actuates the collet chuck mechanism.

The invention will be more clearly understood from the following description, given by way of example only, with reference to the accompanying drawings in which:
Fig. 1A is a sectional view of a generally available wheeled tire, and Fig. 1B is a right side half-cut view of Fig. 1A;
Fig. 2 is a front view of a measuring apparatus embodying the invention;
Fig. 3 is an enlarged sectional view of a wheeled tire supporting portion of the apparatus shown in Fig. 2;
Fig. 4 is an enlarged sectional view showing a structure for chucking a wheeled tire;
Fig. 5 is a sectional view taken along a line A-A' of Fig. 4;
Fig. 6 is a sectional view taken along a line B-B' of Fig. 1 for illustrating a spindle support structure;
Fig. 7 is a sectional view showing a structure for holding a wheeled tire WT in another embodiment of the invention;
Fig. 8 is a sectional view showing an upper portion of a spindle in another embodiment; and
Fig. 9 is an enlarged view showing an elevating unit.

A measuring apparatus for uniformity and/or dynamic-balance of a wheeled tire, which embodies the present invention, will be described hereinafter with reference to the accompanying drawings.

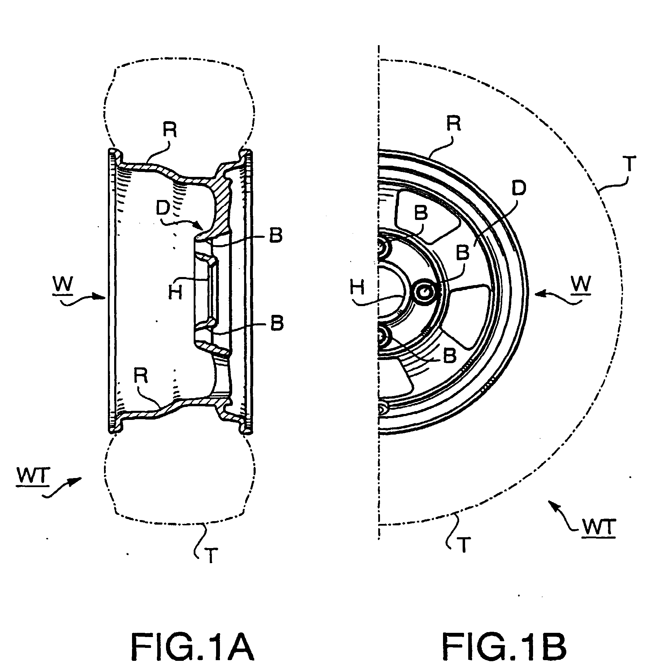

Fig. 1A is a sectional view of a generally available wheeled tire WT, and Fig. 1B is a right side half-cut view of Fig. 1A.

The wheeled tire WT is constituted by a wheel W and a tire T. The wheel W comprises a rim part R on which the tire T is to be mounted and a disk part D which is to be secured to a wheel shaft of a car, not shown. A hub hole H is formed at the center of the disk part D and a plurality of bolt holes B ("four" in the illustrated wheel) are formed around the hub hole H.

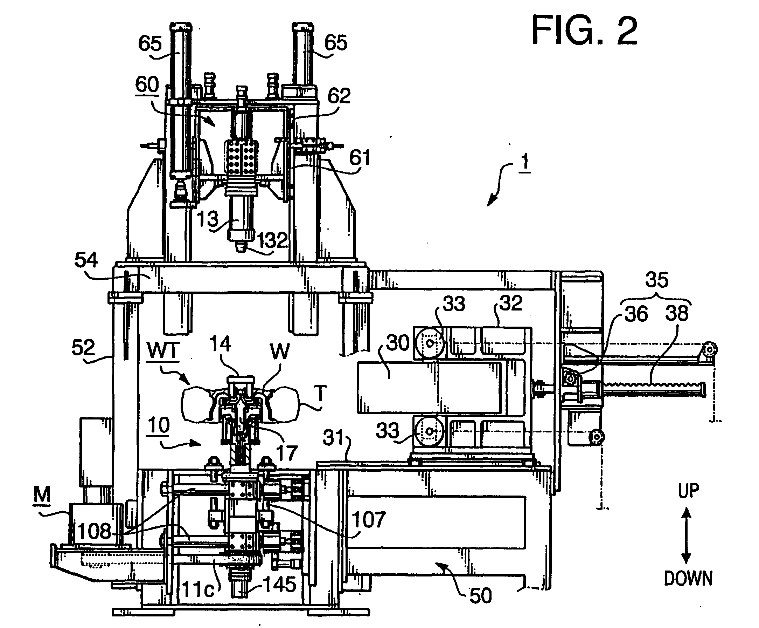

Fig. 2 is a front view showing the basic construction of an apparatus for measuring uniformity and/or dynamic-balance of a wheeled tire embodying the invention (hereinafter called as "a measuring apparatus 1").

The frame of the measuring apparatus 1 comprises a base 50, struts 52 extending upward from the base 50, and a roof 54 supported by the struts 42. A spindle unit 10 is mounted on the base 50 to hold and rotate a wheeled tire WT to be tested.

First, a wheeled tire supporting system will be described.

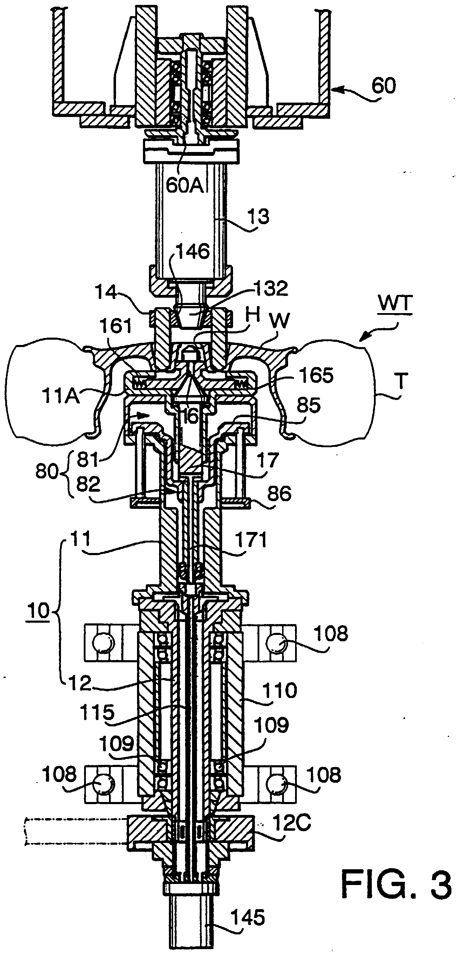

Fig. 3 is a sectional view of the wheeled tire supporting portion of the apparatus 1 shown in Fig. 2. The spindle unit 10 is constituted by a pair of upper and lower hollow spindle shafts 11 and 12, which are vertically and coaxially connected. At a joint between the upper spindle 11 and the lower spindle 12, flanges of the respective spindles are secured to each other. The lower spindle 12 is rotatably supported by a spindle housing 110 via bearings 109. The spindle housing 110 is secured to the base 50 (Fig. 2) via level torsion bars 108 described later.

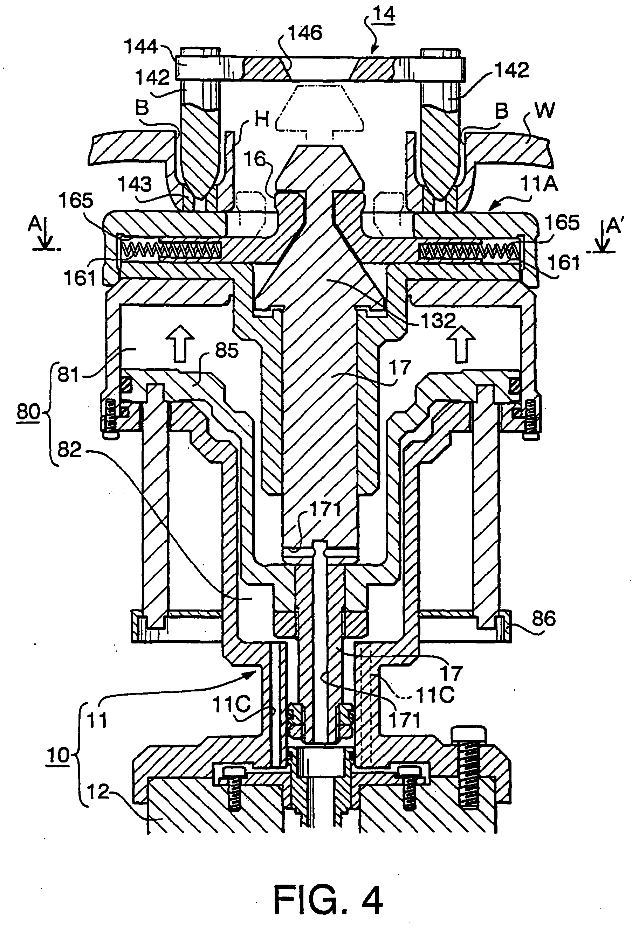

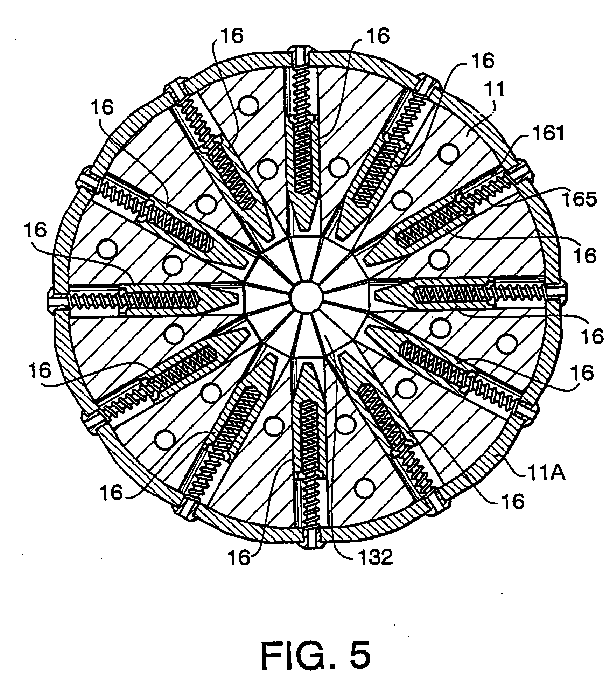

Fig. 4 is an enlarged sectional view showing the upper spindle 11, and Fig. 5 is a sectional view of the upper spindle 11 taken along the line A-A' of Fig. 4. As shown in Figs. 4 & 5, at the upper end of the upper spindle 11, provided are a plurarity of chuck pawls 16 for chucking the hub hole H of the wheel W of the wheeled tire WT. The chuck pawls 16 protrude by a predetermined amount from the upper end surface of the spindle 11 so as to be internally engaged with the hub hole H of the wheel W, as indicated by a dotted-chain line in Fig. 4.

The chuck pawls 16 are slidably supported inside guide grooves 161 formed in the upper spindle 11 and radially extended in respective directions. The top end of the upper spindle 11 is covered by a cap 11A (Fig. 4) so that the sliding movements of the chuck pawls 16 in the guide grooves 161 are guided. Thus, each of the chuck pawls 16 is movable in a radial direction of the upper spindle 11. Each of the chuck pawls 16 is pressed toward the radial center of the upper spindle 11 by a coil spring 165.

As shown in Fig. 4, a rod 17 having a bell shaped portion for driving the chuck pawls 16 is provided inside the upper spindle 11. The rod 17 is held at the radial center of the upper spindle 11 while displaceable in an axial direction. Further, the rod 17 has its end formed as a pyramid 132 with twelve slopes (see Fig. 5), each of the slopes being in contact with the corresponding chuck pawl 16. When the rod 17 is upwardly moved, the pyramid 132 presses the chuck pawls 16 outward so that the chuck pawls 16 are displaced outward in a radial direction of the wheel W against the biasing force of the coil springs 165.

In order to drive the rod 17, a hollow air chanter 80 is provided around the rod 17 of the upper spindle 11. The rod 17 is formed to be integral with a movable wall 85 segmenting the air chanter 80 into an upper portion 81 and a lower portion 82. Imbalance of air pressure between the upper and lower portions 81, 82 of the air chanter 80 separated by the movable wall 85 causes the rod 17 to be upwardly or downwardly moved together with the movable wall 85.

In order to selectively blow air into either one of the upper and lower portions 81, 82 of the air chamber 80, an air duct 115 is provided in the hollow portion of the lower spindle 12 (Fig. 3). Air flows in the interior and exterior of the air duct 115. The lower end of the air duct 115 is joined to a rotary joint 145 attached to the lower end of the lower spindle 12. The rotary joint 145 is capable of supplying air to the interior and exterior of the air duct 115.

In order to flow the air in the interior of the air duct 115 toward the upper portion 81 of the air chamber 80, the rod 17 is provided with an air passage 171 opening at the lower end thereof. In order to flow the air in the exterior of the air duct 115 toward the lower portion 82, an air passage 11C extending from the lower portion 82 to the lower end of the upper spindle 11 is provided.

By supplying air to the exterior of the air duct 115 so as to supply air to the lower portion 82, the movable wall 85 is upwardly moved. The air inside the upper portion 81 is discharged via the air passage 171 and the interior of the air duct 115. With this, the rod 17 is lifted to press the chuck pawls 16 to be outwardly moved so that the chuck pawls 16 chuck the hub hole H of the wheel W. On the other hand, by supplying air to the interior of the air duct 115 so as to supply air to the upper portion 81, the movable wall 85 is descended. The air in the lower portion 82 is discharged via the air passage 11C and the exterior of the air duct 115. With this, the rod 17 comes down so that the pressure applied to the chuck pawls 16 is removed, and the chucking action is released as the chuck pawls 16 are moved inwardly by the biasing force of the springs 165.

Thus, by using the rotary joint 145 to control air flow, the chucking action and the release action by the chucking pawls 16 for the wheel W are controlled. A sensor plate 86 is fixed to the movable wall 85 to detect the position of the movable wall 85 (i.e., the position of the rod 17). When the sensor plate 86 is at the lowered position, the sensor plate 86 is detected by a proximity sensor, not shown.

As shown in Fig. 3, a pulley 12C is mounted adjacent to the lower end of the lower spindle 12. The pulley 12C is connected to a motor M (Fig. 2) via an endless belt indicated by a dotted chain line in Fig. 3. With thus constituted, the spindle unit 10 can be rotated while the wheeled tire WT is being gripped.

As illustrated in Fig. 4, an adapter 14 is attached to the wheel W of the wheeled tire WT before mounted to the measuring apparatus 1. The adapter 14 comprises pins 142 respectively engaged with the plurality of bolt holes B of the wheel W, and a disk 144 by which the pins 142 are securely carried. The pins 142 do not directly engage the bolt holes B but engage bushes 143 fitted to the bolt holes B, respectively. A tapered center hole 146 is formed at the radial center of the disk 144 of the adapter 14.

As shown in Figs. 1 & 3, a center pin shaft 13 extends downwardly from an elevating housing 60 disposed above the spindle unit 10. The center pin shaft 13 is arranged coaxially with the spindle unit 10 and has the lower end 132 thereof formed as a truncated cone to be engageable with the center hole 146 of the disk 144 of the adapter 14. The center pin shaft 13 is secured to a rotary member 60A rotatably supported by the elevating housing 60.

As shown in Fig. 2, the elevating housing 60 is supported so as to be vertically moveable by four sets of linear guides 61 and carriages 62 (only one set is shown in Fig. 2), and is driven vertically by a pair of elevating cylinders 65. When a uniformity measurement is performed, the elevating housing 60 is lowered so that the lower end 132 of the center pin shaft 13 engages the center hole 146 of the adapter 14.

On one side of the spindle unit 10 (right-hand side in Fig. 2) is provided a rotating drum 30 for a uniformity measurement. The rotating drum 30 is mounted in a moveable housing 32 that can slide on rails 31 extending in the direction in which the drum 30 approaches and leaves away from a wheeled tire WT supported by the spindle unit 10, and is moved by a rack pinion mechanism 35 (a pinion 36 and a rack 38) that is driven by a motor, not shown. In addition, load cells 33 are attached to a rotating shaft of the rotating drum 30 to detect a reaction force applied in the radial direction and thrust direction by a wheeled tire WT to the rotating drum 30.

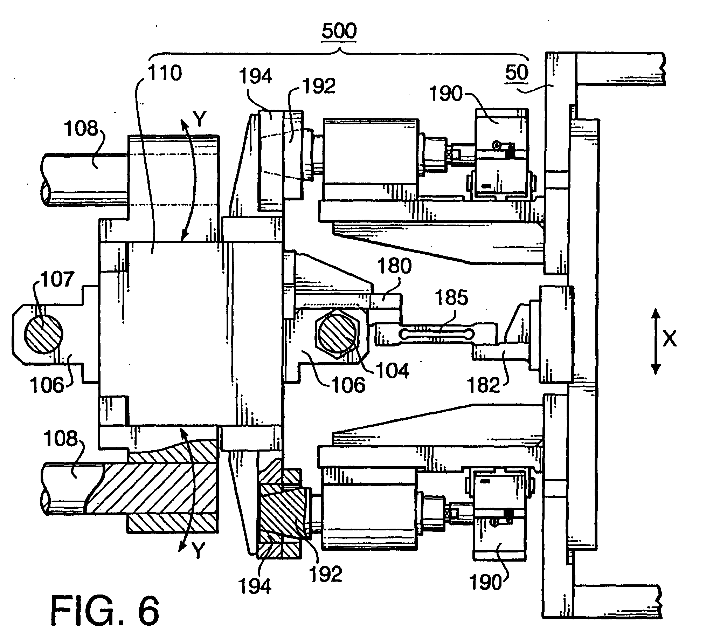

Fig. 6 is a sectional view taken along the line B-B' of Fig. 1 for illustrating a spindle support structure.

As shown in Figs. 2 & 6, the spindle housing 110 is mounted on the base 50 via bar springs 108 extending in the horizontal direction and is supported by bar members 107 suspended from the base 50 in the vertical direction. The bar springs 108 can be elastically deformed in the deflecting direction shown as "Y" in Fig. 6, and the spindle housing 110 can vibrate in the direction referred to as "X" in Fig. 6, within a surface crossing the central axis of the spindle unit 100.

In order to detect vibration in the X direction occuring when the spindle unit 100 is rotated with the wheeled tire WT mounted, a mounting bar 180 extending perpendicularly to both the X direction and the axial direction of the spindle unit 100 is attached to the spindle housing 110. In addition, a mounting bar 182 extends from the base 50 and opposite to the mounting bar 180. A load cell 185 that detects the load effected in the x direction is sandwitched between the two mounting bars 180 and 182.

During a uniformity measurement, as a large load is effected on the spindle shaft 12, the spindle housing 110 must be prevented from vibrating. Thus, as shown in Fig. 6, pressing members 192 each having a conical tip are provided on the base 50, and a pair of tapered recessed portions 194, each of which receives the pressing member 192, are formed on the spindle housing 110. The pressing members 192 are moved by vibration regulating cylinders 190.

That is, during a uniformity measurement, the vibration regulating cylinders 190 are turned on to press the pressing members 192 toward the recessed portions 194 in order to prevent spindle housing 110 from vibrating. On the other hand, during a dynamic-balance measurement, the vibration regulating cylinders 190 are turned off to release the pressing members 192 from the recessed portions 194 in order to allow the spindle housing 110 to vibrate in the x direction.

The spindle housing 110, the bar springs 108, the bar members 107 and the base 50 constitute a suspension 500 for supporting the spindle unit 10.

Hereafter, a uniformity measurement and a dynamic-balance measurement with the above described apparatus 1 will be explained. A wheeled tire WT to be tested is mounted on the measuring apparatus 1. The adapter 14 is already coupled to the wheel W, and the tire T is filled with sufficient air to provide a proper air pressure, in advance.

First, with air flow control by means of the rotary joint 145 (Fig. 3), the rod 17 (Fig. 4) is upwardly moved for driving the chuck pawls 16 so as to be internally engaged with the hub hole H of the wheel W of the wheeled tire WT to be tested.

In the uniformity measurement, the vibration control cylinders 190 of the suspension 500 are operated so as to prevent the vibration of the spindle unit 10. In addition, the elevating housing 60 is lowered so that the lower end 132 of the center pin shaft 13 is coupled to the center hole 146 of the adapter 14. After the slide housing 32 is moved toward the left-hand side in Fig. 2 in order for the rotating drum 30 to be pressed against the peripheral surface of the wheeled tire WT, the spindle unit 10 is rotated so that a load variation during the rotation is detected by the load cell 33.

Since the upper and lower ends of the spindle unit 10 are supported by the center pin shaft 13 and the suspension 500, respectively, so as to be unable to vibrate, the spindle unit 10 can withstand the load caused by the pressure from the rotating drum 30. The measuring apparatus 1 calculates an extent to which the tire T should be scraped based on the result of the uniformity measurement and scrapes the tire T using a scraping device, not shown. Details of the uniformity measurement are known in the art so that the description thereof is omitted.

In the dynamic-balance measurement, the slide housing 32 is moved to the right-hand side in Fig. 2 in order to detach the rotating drum 30 from the wheeled tire WT. Further, the pressure from the vibration control cylinders 190 of the suspension 500 are removed, and the elevation housing 80 is lifted so that the center pin shaft 13 is detached from the adapter 14. As a result, the spindle unit 10 is relatively free to vibrate on a plane.
In this state, the spindle unit 10 is rotated so that the load cell 185 detects the vibration. The measuring apparatus 1 determines which part of the wheeled tire WT should carry a balance weight based on the result of the dynamic- balance measurement, and provides markings in target areas using a marking device, not shown. Details of the dynamic-balance measurement are known in the art so that the description thereof is omitted.

As described above, with the measuring apparatus 1 embodying the invention, both a uniformity measurement and a dynamic-balance measurement of a wheeled tire can be performed with one time mounting of a wheeled tire.

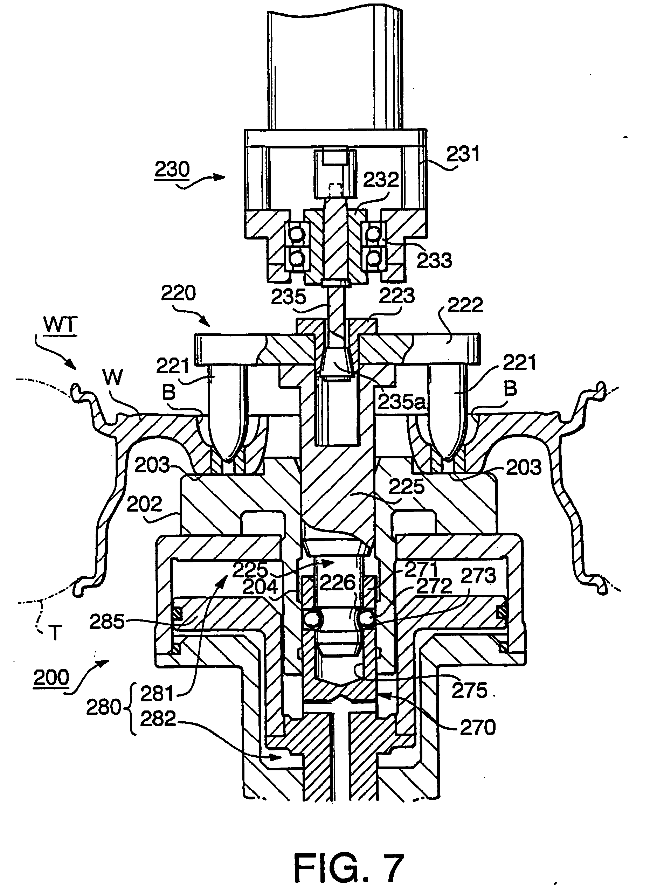

Figs. 7 through 9 show another embodiment of a measuring apparatus according to the invention. It is substantially same as the before-described measuring apparatus except a structure for holding a wheeled tire WT. Therefore, only the different portions of the apparatus will be described hereinafter.

Fig. 7 is a front sectional view showing a structure for holding a wheeled tire WT in this embodiment. A cap part 202 fitted on the upper end of a spindle unit 200 is provided with a contact surface 203 that comes into contact with the disk D of the wheel W of a wheeled tire WT. Above the spindle unit 200, there are provided an adapter 220 for pressing the wheel W against the contact surface 203 and an adapter carrying unit 230 for rotatably carrying the adapter 220.

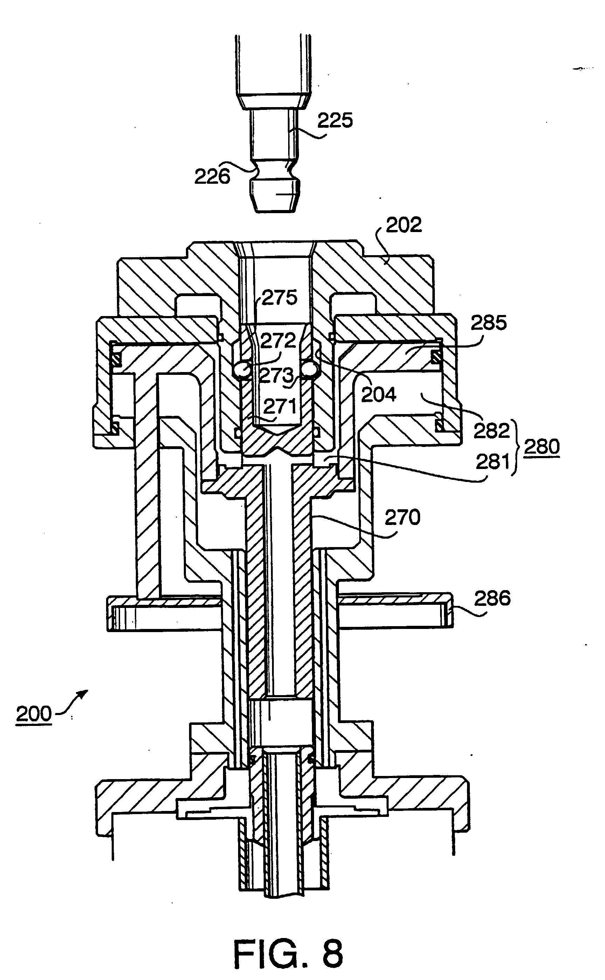

The adapter 220 comprises a plurality of pins 221 to be engaged with respective bushes inside the bolt holes B of the wheel W, and a disk 222 by which the plurality of pins 221 are securely carried. Further, an insertion shaft 225 to be inserted into the interior of the spindle unit 200 in the axial direction thereof extends downward from the center of the disk 222. In Fig. 7, the insertion shaft 225 of the adapter 220 is inserted into the interior of the spindle unit 200. Fig. 8 shows the insertion shaft 225 of the adapter 220 drawn out of the spindle unit 200.

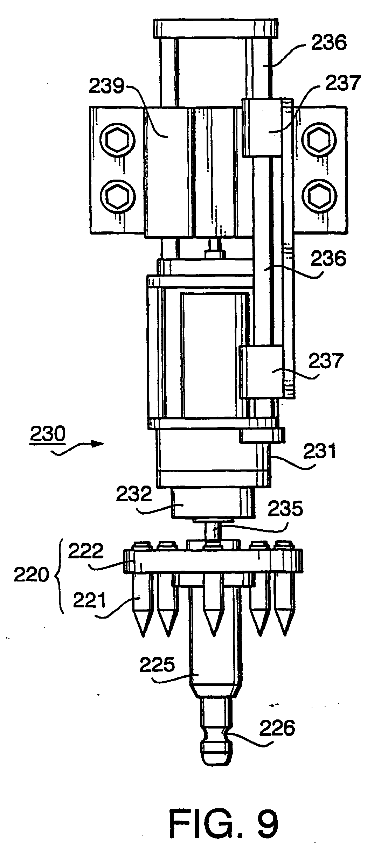

The adapter carrying unit 230 comprises an elevation carrier 231 and a rotating part 232. The elevation carrier 231 is driven to be elevated or lowered by an elevation cylinder 239 (Fig. 9) described later, and the rotating part 232 is rotatably supported by the elevation carrier 231 via bearings 233. The adapter 220 is supported by a supporting shaft 235 extending downward from the rotating part 232 as described later in detail. The rotary center of the rotating part 232 is aligned with that of the spindle unit 200.

Fig. 9 is an enlarged view of the elevating unit 230. The elevation cylinder 239 for driving the elevation carrier 231 to be elevated or lowered is fixed to an apparatus frame, not shown. In order to guide the upward and downward movements of the elevation carrier 231, the elevation carrier 231 is provided with a vertically extending bar 236. The bar 236 extends through a pair of support members 237 fixed to an apparatus frame, not shown.

As shown in Figs. 7 & 8, an axially slidable rod 270 for leading the insertion shaft 225 to the interior of the spindle unit 200 is provided inside the spindle unit 200. An air chamber 280 for axially moving the rod 270 is formed in the interior of the spindle unit 200. The air chamber 280 is segmented into an upper portion 281 and a lower portion 282 by a movable wall 285. The construction for blowing air to the upper and lower portions 281 and 281 of the air chamber is the same as that of the before-described embodiment. That is, the rotary joint 145 (Fig. 3) lifts or lowers the rod 270 by the flow control.

The rod 270 is constituted so as to chuck the insertion shaft 225 in a so-called collet chuck fashion. That is, an insertion hole 275 for admitting the insertion shaft 225 is formed at the upper end of the rod 270. Retention slots 273 for holding balls 272, respectively, are formed on a wall portion 271. The respective retention slot 273 is constituted such that it retains the ball 272 in a state where the ball 272 cannot drop therefrom but can move in a direction of thickness of the wall portion 271. Since the thickness of the wall portion 271 is smaller than the outer diameter of the ball 272, the ball 272 either protrude toward the interior of the insertion hole 272 or protrude outside the periphery of the rod 270.

A groove 204 (i.e., larger inner-diameter portion) extending in the circumferential direction is formed in the inner wall of the spindle unit 200 surrounding the rod 270. When the balls 272 held by the rod 270 face the groove 204, the balls 272 are free to protrude outside the periphery of the rod 270. In this state, the insertion shaft 225 can be inserted into the insertion hole 275 of the rod 270 without being obstructed by the balls 272.

By moving the rod 270 downward after the insertion shaft 225 is inserted into the insertion hole 275 of the rod 270, the balls 272 engage an engagement groove 226 formed on the intermedetate circumferential surface of the shaft 225, as shown in Fig. 7, as they are prevented from protruding outside the rod 270 by the inner surface of the cap part 202. Thus, the insertion shaft 225 is properly chucked in the spindle unit 200. In this state, the pins 221 of the adapter 220 are engaged with the respective bolt holes B of the wheel W so as to press the wheeled tire WT against the contact surface 203 of the spindle unit 200.

In the dynamic-balance measurement, the elevation carrier 231 is lowered further from the state shown in Fig. 7, so that the truncated cone portion 235a of the shaft member 235 passes through and disengage from a bush 223. Thus, the spindle unit 200 is supported only by the suspension 500, and is held with allowing free vibration.

In the uniformity measurement, the elevation carrier 231 is lifted so that the truncated cone portion 235a of the shaft member 235 is re-engaged with the bush 223 so as to apply the pulling-up force to the adapter 220. Further, vibration control is effected by the vibration control cylinder 190 of the suspension 500. With this, the upper and lower ends of the spindle unit 200 is held so as to be unable to vibrate, the spindle unit 200 can withstand the load caused by the pressure from the rotating drum 30.

Thus, the above-described modified apparatus makes it possible to perform both the uniformity measurement and the dynamic-balance measuerment by once holding the wheeled tire WT thereon

## Claims

1. A measuring apparatus for measuring one or both of the uniformity and the dynamic-balance of a wheeled tire, which comprises:
a rotatable spindle unit for supporting a wheeled tire to be tested, said spindle unit being provided, at the upper end portion thereof, with a chucking system for chucking a wheel of said wheeled tire;
a holding member which holds said spindle unit whilst allowing the spindle unit to vibrate during rotation thereof; and
a regulating system which prevents the vibration of said spindle unit during rotation thereof,
wherein the vibration of the spindle unit is prevented by said regulating system during a uniformity measurement.

2. The measuring apparatus according to claim 1, wherein said chucking system comprises a plurariry of chucking pawls radially arranged about the axial center of said spindle unit, said chucking pawls being respectively movable in the radial direction.

3. The measuring apparatus according to claim 2, wherein said chucking pawls are biased toward the axial center of said spindle unit by spring members, respectively, and moved away from the axial center against biasing force of said spring members so as to internally engage a hub hole of a wheel of said wheeled tire for chucking.

4. The measuring apparatus according to claim 1, 2 or 3 which further comprises a chuck driving member arranged inside said spindle unit so as to move in the axial direction of the spindle unit for driving said chucking system, said chuck driving member being provided with an actuating portion at the upper end thereof to actuate said chucking unit.

5. The measuring apparatus according to claim 4, wherein said actuating portion is formed as a pyramid having a plurality of slope surfaces, and wherein said chucking system comprises a plurariry of chucking pawls radially arranged about the axial center of said spindle unit, the inner ends of said chucking pawls contacting said slope surfaces of the actuating portion to be respectively moved in the radial direction upon axial movement of said chuck driving member.

6. The measuring apparatus according to claim 4 or 5 which further comprises a hollow air chamber formed in said spindle unit, said chuck driving member extending through said hollow air chamber and provided with a wall member which segments said air chamber into upper and lower portions, and an air supply system arranged inside said spindle unit for selectively supplying air into either one of said upper and lower portions of the hollow air chamber; and wherein imbalance of air pressure between the upper and lower portions of the air chamber causes said chuck driving member to be moved in the axial direction of the spindle unit.

7. The measuring apparatus according to any preceding claim, which furhter comprises a pressing unit disposed above said spindle unit for pressing said wheeled tire toward said spindle unit with allowing rotation thereof to firmly hold a wheeled tire between said pressing unit and said spindle unit.

8. The measuring apparatus according to claim 7, wherein said pressing unit is provided with a center shaft member downwardly extending therefrom, said center shaft member being rotatably supported by the pressing unit; and wherein an adapter member is placed between said wheeled tire and said pressing unit, said adapter member comprising a plurality of pins arranged to be engaged with a plurality of bolt holes of the wheel of said wheeled tire, respectively, and a disk member which securely carries said pins and provided with a tapered hole at the center thereof, the lower end of said center shaft member being engaged with said tapered hole when pressing the wheeled tire toward the spindle unit.

9. The measuring apparatus according to any preceding claim, which further comprises a rotary drum arranged to be pressed against the circumferential surface of a wheeled tire to be tested, during a uniformity measurement.

10. The measuring apparatus according to claim 9, which further comprises a frame member; and wherein said holding member comprises a housing which rotatably holds said spindle unit, and a plurality of elastic members provided between said housing and said frame member for supporting said housing.

11. The measuring apparatus according to claim 10, wherein said regulating system comprsies a coupling member supported by said frame member to be movable between operative and inoperative positions, said coupling member firmly coupling said housing to said frame member at the operative position; and wherein said coupling member is moved to the operative position during a uniformity measurement.

12. A measuring apparatus for measuring one or both of the uniformity and the dynamic-balance of a wheeled tire, which comprises:
a rotatable spindle unit for supporting a wheeled tire to be tested;
an adapter member for securely fitting said wheeled tire onto said spindle unit;
a holding member which holds said spindle unit whilst allowing the spindle unit to vibrate during rotation thereof; and
a regulating system which prevents the vibration of said spindle unit during rotation thereof,
wherein the vibration of said spindle unit is prevented by said regulating system during a uniformity measurement.

13. The measuring apparatus according to claim 12, which further comprises an adapter carrying unit for rotatably carrying said adapter member, said adapter carrying unit being movable in the axial direction of said spindle unit.

14. The measuring appratus according to claim 12, wherein said adapter member comprises a disk member, a plurality of pins carried by said disk member to be engaged with bolt holes of a wheel of the wheeled tire, respectively, and an insertion shaft extending downwardly from the center of said disk member to be inserted into the interior of said spindle shaft and engaged therewith with passing through a hub hole of a wheel of the wheeled tire.

15. The measuring apparatus according to claim 14, wherein said spindle unit is provided with a receiving hole at the upper center portion thereof for receiving said insertion shaft of the adapter member, said insertion shaft being chucked by a collet chuck mechanism in said spindle unit so as to sandwitch a wheel of the wheeled tire to be tested between said adapter member and the upper portion of the spindle unit.

16. The measuring apparatus according to claim 14 or 15, which further comprises an adapter carrying unit for rotatably carrying said adapter member, said adapter carrying unit being constituted to be movable in the axial direction of said spindle unit and to be able to release said adapter member when said adapter member is connected to the spindle unit; and wherein said adapter member is released from said adapter carrying unit during a dynamic-balance measurement.

17. The measuring apparatus according to claim 15, which further comprises a hollow air chamber formed in said spindle unit, a wall member which segments said air chamber into upper and lower portions, and an air supply system arranged inside said spindle unit for selectively supplying air into either one of said upper and lower portions of the hollow air chamber; and wherein imbalance of air pressure between the upper and lower portions of the air chamber actuates said collet chuck mechanism.

18. The measuring apparatus according to any one of claims 12 to 17, which further comprises a rotary drum arranged to be pressed against the circumferential surface of a wheeled tire to be tested, during a uniformity measurement.

19. The measuring apparatus according to any one of claims 12 to 18, which further comprises a frame member; and wherein said holding member comprises a housing which rotatably holds said spindle unit, and a plurality of elastic members provided between said housing and said frame member for supporting said housing.

20. The measuring apparatus according to any one of claims 12 to 19, wherein said regulating system comprsies a coupling member supported by said frame member to be movable between operative and inoperative positions, said coupling member firmly coupling said housing to said frame member at the operative position; and wherein said coupling member is moved to the operative positioin during a uniformity measurement.
